# EUROPEAN PATENT SPECIFICATION

(11) **EP 2 497 934 B1**
(45) Date of publication and mention of the grant of the patent: **30.04.2014**
(21) Application number: 11382059.1
(22) Date of filing: 07.03.2011
(51) Int. Cl.: F02K 1/38, F02K 1/46

(54) **Flow evacuation system for an aircraft engine**
Flussentleerungssystem für ein Flugzeugtriebwerk
Système d'évacuation de flux pour moteur d'avion

(43) Date of publication of application: 12.09.2012
(73) Proprietor: EADS Construcciones Aeronauticas, S.A., 28022 Madrid (ES)
(72) Inventor: Ibáñez Colás, Vicente, 28906 Getafe, Madrid (ES); Mariscal Sánchez, Francisco Javier, 28906 Getafe, Madrid (ES); Angel Blasco, Emilio Javier, 28906 Getafe, Madrid (ES); González Biedma, Carlos, 28906 Getafe, Madrid (ES); Perdones Díaz, David, 28906 Getafe, Madrid (ES)
(74) Representative: Elzaburu Marquez, Alberto

(56) References cited:
- EP-A1- 0 119 732
- FR-A1- 2 112 339
- GB-A- 1 045 295
- JP-A- 2003 314 368
- US-A- 2 648 192
- US-A- 4 215 536
- US-A- 4 298 089

## Description

### FIELD OF THE INVENTION

The present invention relates to the flow evacuation system of an aircraft gas turbine engine and, more in particular, of a turboprop or a turboshaft engine.

### BACKGROUND OF THE INVENTION

A typical turboprop engine comprises a core engine that includes a compressor section, a combustor and a first turbine in serial flow relationship, and a power turbine located aft the first turbine. Pressurized air from the compressor section is mixed with fuel and burned in the combustor to produce a high energy gas stream. The power turbine extracts energy from the gas stream to power the propeller. The engine also includes a nozzle which drives this flow outwards the engine.

In the prior art are known aircraft engine flow evacuation systems for evacuating the engine exhaust gases flow and the ventilation flow that ventilates the engine nacelle, including an eductor where both flows are mixed and channeled to the eductor outlet.

US 2007/0089398 disclose a flow evacuation system with an eductor having a plurality of flow straighteners configured to reduce swirl motion of the gas that flows therethrough in order to avoid that a portion of exhaust gases may swirl within the eductor but may not flow out the eductor outlet.

It is also known document GB1045295 which discloses a noise suppression device for reducing the noise generated by a high velocity gaseous jet issuing into the ambient atmosphere which comprises a nozzle having vanes to impart rotation to the gaseous jet issuing from the nozzle and an ejector shroud disposed about the nozzle.

Also known is document EP0119732 disclosing a thrust augmentation apparatus for a propulsive gas jet in which vanes transmit drive to fan blades in an outer housing to promote a thrust augmenting air flow.

Another known device is the disclosed by document US2648192 which is a variable capacity jet exhaust augmenter.

It is also known document FR7132183 which discloses the characteristics of thermodynamically and aerodynamically dissimilar fluids in swirling flow relationship to accelerate mixing and hence combustion in the combustion zone.

Also known is document US4298089 which discloses a method and apparatus for reducing jet noise in a turbofan engine by causing internal mixing of fan and primary air to reduce the maximum velocity of gases at the nozzle exit plane by creating a particular type of vortex flow.

Another known device is the disclosed by document US4215536 which is a fluid mixing apparatus for mixing the coaxially flowing streams of fan air and primary exhaust within a turbofan engine.

Finally it is also known document JP2003314368 which discloses a lobe mixer for a gas turbine which mixes a main flow with a secondary flow at a low speed.

One problem of these known flow evacuation systems is that the ventilation capacity decrease in certain operating conditions causing an overheating of the engine nacelle.

The present invention is intended to the solution of this problem.

### SUMMARY OF THE INVENTION

An object of the present invention is to provide an efficient flow evacuation system for an aircraft engine, particularly for a turboprop or a turboshaft engine, in a variety of operating conditions.

Another object of the present invention is to provide a flow evacuation system for an aircraft engine, particularly for a turboprop or a turboshaft engine, with a high ventilation capacity.

In one aspect, these and other objects are met by a flow evacuation system for an aircraft engine comprising an engine nozzle that conveys the engine exhaust flow and an eductor receiving said engine exhaust flow and the engine ventilation flow, the engine nozzle having a final section in contact by its outer surface with said ventilation flow, the engine exhaust flow having a low swirl when the engine operates under design conditions and a high swirl when the engine operates out of design conditions, the engine nozzle comprising a plurality of local flow conditioners placed in its inner surface in said final section for reducing the swirl of the engine exhaust flow at the exit of the engine nozzle, for producing further depression to improve the suction effects over the ventilation flow and for facilitating the mixture of the engine exhaust flow and the ventilation flow, enhancing its evacuation along the eductor.

In embodiments of the present invention said local flow conditioners are fins oriented radially, fins oriented with predetermined angular deviation with respect to a radial orientation or fins oriented with a variable angular deviation with respect to a radial orientation. Therefore some fins orientation choices are provided for a better accommodation to the flow evacuation needs of each engine.

In embodiments of the present invention said local flow conditioners are fins distributed along the full final section of the engine nozzle or fins distributed along a sector of the final section of the engine nozzle, preferably, in both cases, in an equally spaced distribution. Therefore some fin distribution choices are provided for a better accommodation to the flow evacuation needs of each engine.

In embodiments of the present invention said fins are flat plates, curved plates or airfoil-shaped bodies. Therefore some fin configuration choices are provided for a better accommodation to the flow evacuation needs of each engine.

In embodiments of the present invention, said flat plates have a rectangular or a trapezoidal shape, being the inclined side its leading edge with respect to the engine exhaust flow. These specific shapes are suitable shapes for a great number of aircraft engines.

In embodiments of the present invention the relevant dimensions of said flat pates for obtaining good results are the following:
- the height H of said fins is comprised between D/20 and D/10, being D the diameter of the engine nozzle in said final section;
- the length L of said fins is comprised between 2H and 4H;
- the distance S of said fins to the engine nozzle outlet is comprised between H and 3H.

In another aspect the above mentioned objects are met by an aircraft engine comprising a flow evacuation system having the abovementioned features, being said engine a turboshaft engine or a turboprop engine.

Other features and advantages of the present invention will be understood from the following detailed description in relation with the enclosed drawings.

### BRIEF DESCRIPTION OF DRAWINGS

Figures 1 and 2 show schematically the flow evacuation system of an aircraft engine.
Figure 3 shows schematically a flow evacuation system where the engine exhaust flow has a significant swirl at the exit of an engine straight nozzle.
Figure 4 shows schematically a flow evacuation system where the engine exhaust flow has a significant swirl at the exit of an engine curved nozzle.
Figure 5 shows the total pressure distribution of an engine exhaust flow in the engine nozzle final section.
Figure 6 shows schematically a case of failure of a flow evacuation system due to an excessive swirl of the engine exhaust flow in the engine nozzle.
Figure 7 shows schematically a flow evacuation system with local flow conditioners according to the present invention.
Figure 8 shows schematically the operation of a flow evacuation system with local flow conditioners according to the present invention in a typical case of engine exhaust flow with low swirl.
Figure 9 shows schematically the operation of a flow evacuation system with local flow conditioners according to the present invention in a typical case of engine exhaust flow with high swirl.
Figure 10 is a transversal section of a nozzle with local flow conditioners distributed radially.
Figures 11 and 12 are transversal sections of a nozzle with local flow conditioners distributed, respectively, with a predetermined angular deviation and with a variable angular deviation with respect to the radial orientation of Figure 10.
Figure 13 is a transversal section of the final section of a nozzle with local flow conditioners distributed along a sector of the nozzle.
Figures 14, 15 and 16 show schematically local flow conditioners configured respectively as a flat plate, as a curved plate and as an airfoil-shaped body.
Figures 17 and 18 are partial schematic lateral views of a nozzle with two embodiments of local flow conditioners configured as flat plates according to the present invention.

### DETAILED DESCRIPTION OF THE INVENTION

For a better understanding of the present invention, a definition of several terms or expressions used in this application follows:
- Design condition: Operating condition in which the engine exhaust flow presents a low swirl angle, i.e. a swirl angle sufficiently small in the exit of the engine nozzle so that it does not significantly deteriorate the engine performance in terms of fuel consumption, residual thrust or ventilation. It is typically comprised between -15° and +15°.
- Eductor. Duct where the mixture between the engine exhaust flow and the ventilation flow takes place. A part of the energy of the engine exhaust flow is transmitted to the ventilation flow allowing a better ventilation of the engine nacelle.
- Swirl (α): Measurement in degrees (°) of the angular rate of rotation of the engine exhaust flow in the exit cross section of the engine nozzle. α=atan (Vₜ/Vₐₓᵢₐₗ).
- Turboprop: Type of turboengine which has a propeller moved by a power turbine.
- Turboshaft: Type of turboengine which has a shaft moved by a power turbine.

An aircraft engine, housed in a nacelle, requires a cooling and ventilation system to reduce the high temperatures generated within the engine bay under acceptable limits.

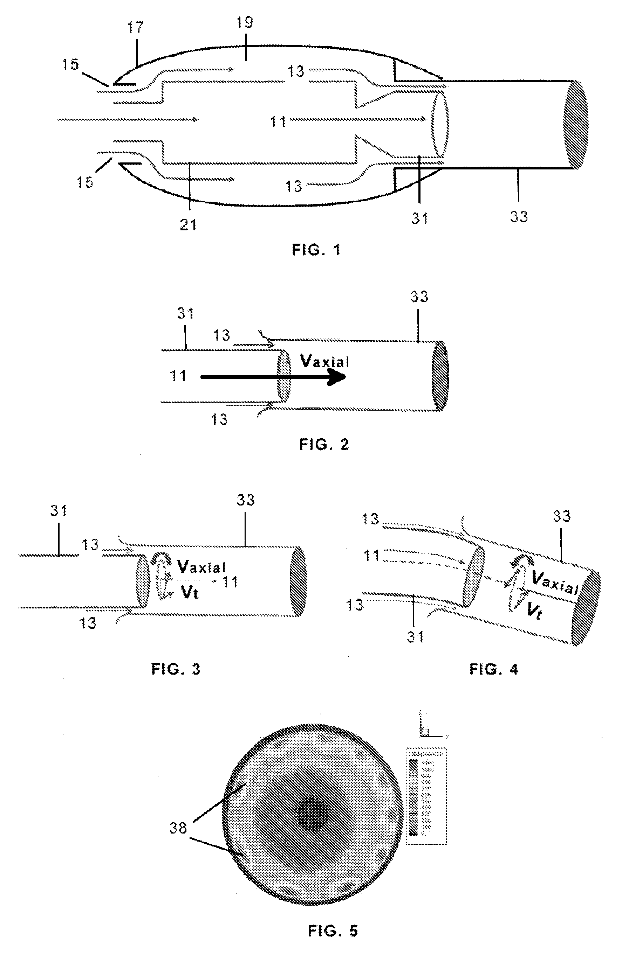

One of the procedures used nowadays to ensure ventilation in aircraft engines is the use of an eductor that mixes (see Figure 1) the engine exhaust flow 11 with the ventilation flow 13. The cooling air is supplied through inlets 15 in the nacelle 17 into the engine ventilation bay 19 around the engine 21, and the engine exhaust flow 11 conveyed by the engine nozzle 31 induces the ventilation flow 13 from the engine bay 19 and mixes it with the engine exhaust flow 11 in the eductor 33.

The operation of this flow evacuation system is based on the fact that the higher energy or primary flow (the engine exhaust flow 11) suctions the lower energy or secondary flow (the ventilation flow 13) to help ventilation through the engine bay 19.

To ensure an effective suction of said ventilation flow 13, the parameters which define the engine exhaust flow 11 must lie between certain limits.

An ideal condition for the engine exhaust flow 11 along the engine nozzle 31 is, as shown in Figure 2, zero swirl. The velocity of the engine exhaust flow 11 in the exit of the engine nozzle 31 has then only an axial component Vₐₓᵢₐₗ.

However the engine exhaust flow 11 has usually a certain swirl as shown in Figures 3 and 4 for straight and curved engine nozzles 31. Therefore the velocity of the engine exhaust flow 11 in the exit of the engine nozzle 31 has an axial component Vₐₓᵢₐₗ and a tangential component Vₜ, which involves, for a high swirl, the flow pressure distribution shown in Figure 5 with high total pressure areas 38 near the engine nozzle wall.

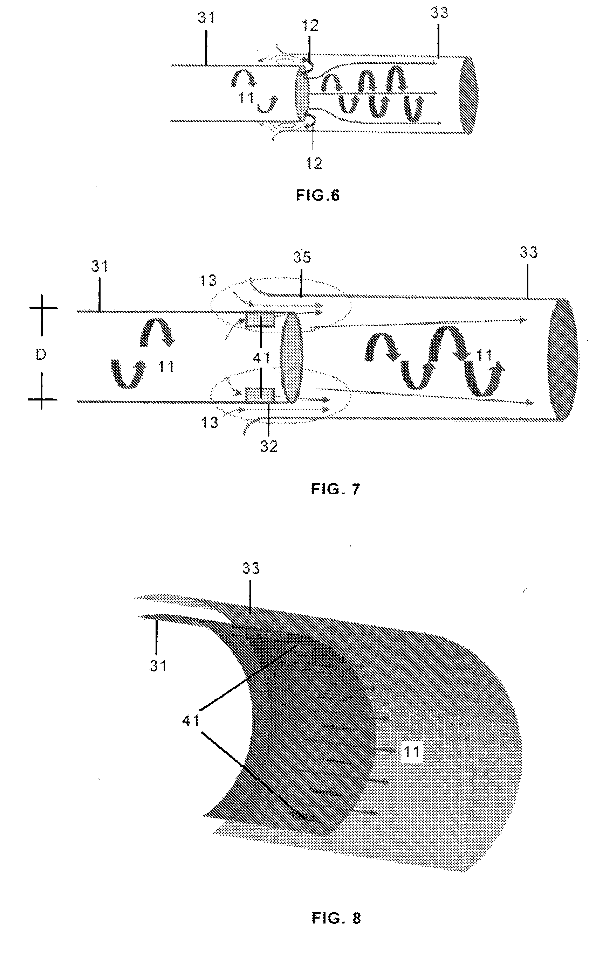

In particular, an excessive swirl of the engine exhaust flow 11 at the engine nozzle exit can prevent the correct suction of the ventilation flow 13 by the engine exhaust flow 11, blocking the nacelle ventilation flow 13 and possibly causing the reingestion of exhaust engine gases 11 towards the ventilation bay of the aircraft engine as shown in Figure 6.

A design objective of an aircraft engine is the avoidance of said swirl in those engine operating conditions which imply greater fuel consumption. Typical aircraft engine configuration restrictions (for example a propeller/power turbine group rotating at a constant speed) can lead to significant swirl values lying outside design conditions, especially when the design conditions are cruise points or high performance points in terms of power. When the swirl of the engine exhaust flow 11 through the engine nozzle 31 increases, the performance of the engine decreases in terms of residual thrust, ventilation capacity and/or increase in fuel consumption.

It is therefore desirable to mitigate the effects of an engine exhaust flow 11 with a high swirl over the ventilation flow 13, permitting the correct ventilation of the nacelle with a minimum cost in terms of consumption and residual thrust.

According to this invention, said mitigation is achieved as shown in Figure 7 by means of a plurality of local flow conditioners 41 installed in the wetted surface of the engine nozzle 31 in its final section 32 to condition the engine exhaust flow 11 leaving the engine nozzle 31 in the area 35 in which the ventilation flow 13 is discharged into the eductor 33.

In embodiments of the present invention said local flow conditioners are, as shown in Figures 8-10 a plurality of small fins 41 fixed to the wetted surface of the exhaust nozzle 31, oriented according to the pattern of an engine exhaust flow 11 without swirl, i.e. a radial orientation.

In design conditions as shown in Figure 8, said small fins 41 do not interfere with the engine exhaust flow 11 so energy losses in said flow are minimized.

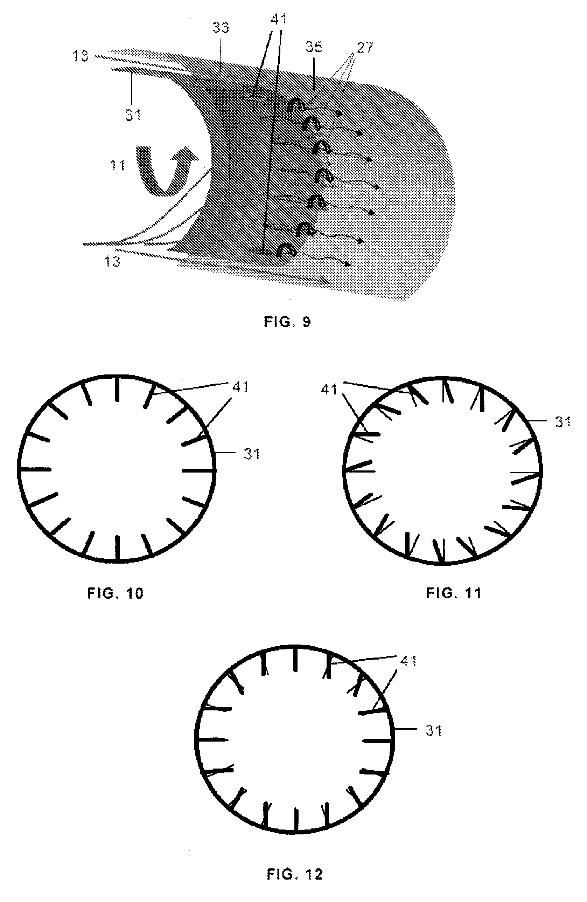

In operating conditions out of design conditions, as shown in Figure 12, the effect of said fins 41 is the local conditioning of the engine exhaust flow 11 leaving the engine nozzle 31 in the area 35 enhancing the ventilation flow 13 due to:
- The local vortices 27 induced by the viscous effects of the engine swirling exhaust flow 11 over the wet walls of the fins 41 help the mixture between the engine exhaust flow 11 and the ventilation flow 13 and produces a further depression to improve the suction effects over this last flow.
- The local reduction of swirl due to the effect of solidity in the space between fins 41.

In embodiments of the invention said small fins 41 have an orientation deviated with respect to the radial orientation of Figure 10, whether a predetermined angular deviation as shown in Figure 11 or a variable angular deviation as shown in Figure 12, for a better accommodation to the operating conditions expected for each engine.

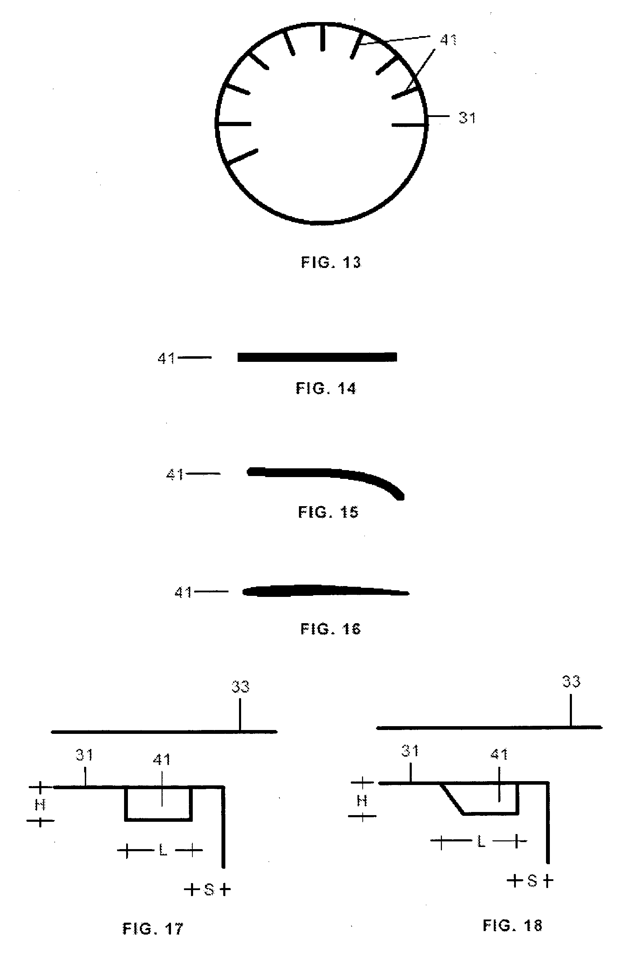

Said fins 41 are normally distributed along the full final section of the nozzle 31 as shown in Figures 10-12, preferably in an equally spaced distribution, but they can be distributed only in one sector of the nozzle 31, as shown in Figure 13, if the ventilation needs in the area not covered by said fins 41 do not require a mitigation of the effects of an engine exhaust flow 11 with a high swirl.

In embodiments of the invention said fins 41 are configured as flat plates as shown in Figure 14, as curved plates as shown in Figure 15 or as airfoil-shaped bodies as shown in Figure 16. A suitable election of the fins shape for a particular engine may achieve an optimization of the evacuation of the engine exhaust flow 11 and/or of the ventilation of the engine nacelle.

In a preferred embodiment said fins 41 are flat plates of a rectangular or a trapezoidal shape (see Figures 17 and 18) with a height H comprised between D/20 and D/10, being D the diameter of the engine nozzle 31 in said final section 32, and a length L comprised between 2H and 4H, that are placed a distance S to the engine nozzle outlet comprised between H and 3H.

An advantage of the present invention is that it provides passive means that enable a significant reduction in the swirl of the engine exhaust flow in operating conditions outside the design conditions, thus increasing the flow evacuation system capacity to boost the ventilation flow.

Another advantage of the present invention is that said local flow conditioners also contribute to an efficient mixing of the engine exhaust flow and the ventilation flow due to the local vorticity and local suction effects produced in the engine exhaust flow by said local flow conditioners.

Further advantages of the present invention are:
- The small height H of said local flow conditioners relative to the nozzle diameter D, thereby exposing a small surface to the engine exhaust flow, results in very low pressure losses, compared to other known systems using fins as flow straighteners.
- The positioning of said local flow conditioners inside the engine nozzle prevents pressure losses on the ventilation flow.
- Location of said local flow conditioners in the engine nozzle reduces its structural impact.
- The weight increase due to said local flow conditioners is very low given its small dimensions relative to other elements of the engine.

Although the present invention has been fully described in connection with preferred embodiments, it is evident that modifications may be introduced within the scope thereof, not considering this as limited by these embodiments, but by the contents of the following claims.

## Claims

1. Flow evacuation system for an aircraft engine comprising an engine nozzle (31) that conveys the engine exhaust flow (11) and an eductor (33) receiving said engine exhaust flow (11) and an engine ventilation flow (13), being the eductor (33) a duct where the mixture between the engine exhaust flow and the ventilation flow takes place and which is configured such that part of the energy of the engine exhaust flow is transmitted to the ventilation flow for a better ventilation of the engine, the engine nozzle (31) having a final section (32) in contact by its outer radial surface with said ventilation flow (13), the engine exhaust flow (11) having a low swirl when the engine operates under design conditions and a high swirl when the engine operates out of design conditions, **characterized in that** said engine nozzle (31) comprises a plurality of local flow conditioners (41) which are fins oriented radially or fins oriented with a predetermined or variable angular deviation with respect to a radial orientation placed in its inner radial surface in said final section (32) configured such that they reduce the swirl of the engine exhaust flow (11) at the exit of the engine nozzle (31), for producing a further depression to improve the suction effects over the ventilation flow (13) and for facilitating the mixture of the engine exhaust flow (11) and the ventilation flow (13), enhancing its evacuation along the eductor (33).

2. Flow evacuation system according to any of claim 1, wherein said local flow conditioners (41) are fins distributed along the full final section (32) of the engine nozzle (31).

3. Flow evacuation system according to any of claims 1-2, wherein said local flow conditioners (41) are fins distributed along a sector of the final section (32) of the engine nozzle (31).

4. Flow evacuation system according to any of claims 2-3, wherein the distribution of said local flow conditioners (41) is an equally spaced distribution.

5. Flow evacuation system according to any of claims 1-4, wherein said fins (41) are flat plates.

6. Flow evacuation system according to claim 5, wherein said fins (41) have a rectangular shape.

7. Flow evacuation system according to claim 5, wherein said fins (41) have a trapezoidal shape, being the inclined side its leading edge with respect to the engine exhaust flow (11).

8. Flow evacuation system according to any of claims 6-7, wherein:
- the height H of said fins (41) is comprised between D/20 and D/10, being D the diameter of the engine nozzle (31) in said final section (32);
- the length L of said fins (41) is comprised between 2H and 4H;
- the distance S of said fins (41) to the engine nozzle outlet is comprised between H and 3H.

9. Flow evacuation system according to any of claims 1-4, wherein said fins (41) are curved plates.

10. Flow evacuation system according to any of claims 1-4, wherein said fins (41) are airfoil-shaped bodies.

11. Aircraft engine comprising a flow evacuation system according to any of claims 1-10, wherein said engine is a turboshaft engine.

12. Aircraft engine comprising a flow evacuation system according to any of claims 1-10, wherein said engine is a turboprop engine.

## Patentansprüche

1. Strömungsauslasssystem für ein Luftfahrzeugtriebwerk mit einer Luftfahrzeugtriebwerksdüse (31), welche den Triebwerkabgasstrom (11) leitet, und einem Ejektor (33), der den Triebwerkabgasstrom (11) und einen Motorbelüftungsstrom (13) aufnimmt, wobei der Ejektor (33) ein Kanal ist, in welchem das Mischen des Triebwerkabgasstroms und des Belüftungsstroms stattfindet, und welcher derart ausgebildet ist, dass ein Teil der Energie des Triebwerkabgasstroms zur besseren Belüftung des Triebwerks an den Belüftungsstrom übertragen wird, wobei die Triebwerksdüse (31) einen Endabschnitt (32) aufweist, der über seine äußere radiale Fläche in Kontakt mit dem Belüftungsstrom (13) steht, wobei der Triebwerkabgasstrom (11) eine geringe Verwirbelung aufweist, wenn das Triebwerk gemäß den Auslegungsbedingungen arbeitet, und eine starke Verwirbelung aufweist, wenn das Triebwerk außerhalb der Auslegungsbedingungen arbeitet, **dadurch gekennzeichnet, dass** die Triebwerksdüse (31) mehrere lokale Strömungskonditionierer (41) aufweist, bei welchen es sich um radial ausgerichtete Rippen oder um Rippen handelt, die mit einer vorbestimmten oder variablen Winkelabweichung in Bezug auf eine radiale Ausrichtung ausgerichtet sind, welche an der inneren radialen Fläche in dem Endabschnitt (32) angeordnet sind, wobei die Rippen derart ausgebildet sind, dass sie die Verwirbelung der Triebwerkabgasströmung (11) am Auslass der Triebwerkdüse (31) verringern, um einen weiteren Unterdruck zur Verbesserung der Saugeffekte gegenüber der Belüftungsströmung (13) zu erzeugen und um die Mischung der Triebwerkabgasströmung (11) und der Belüftungsströmung (13) zu unterstützen, wodurch der Auslass derselben entlang des Ejektors (33) verbessert ist.

2. Strömungsauslasssystem nach Anspruch 1, bei welchem die lokalen Strömungskonditionierer (41) Rippen sind, die über den gesamten Endabschnitt (32) der Triebwerksdüse (31) verteilt sind.

3. Strömungsauslasssystem nach einem der Ansprüche 1-2, bei welchem die lokalen Strömungskonditionierer (41) Rippen sind, die entlang eines Sektors des Endabschnitts (32) der Triebwerksdüse (31) verteilt sind.

4. Strömungsauslasssystem nach einem der Ansprüche 2-3, bei welchem die Verteilung der lokalen Strömungskonditionierer (41) eine gleichmäßig beabstandete Verteilung ist.

5. Strömungsauslasssystem nach einem der Ansprüche 1-4, bei welchem die Rippen (41) flache Platten sind.

6. Strömungsauslasssystem nach Anspruch 5, bei welchem die Rippen (41) rechteckförmig sind.

7. Strömungsauslasssystem nach Anspruch 5, bei welchem die Rippen (41) trapezförmig sind, wobei die geneigte Seite in Bezug auf die Triebwerkabgasströmung (11) die Vorderkante ist.

8. Strömungsauslasssystem nach einem der Ansprüche 6-7, bei welchem:
- die Höhe H der Rippen (41) zwischen D/20 und D/10 beträgt, wobei D der Durchmesser der Triebwerksdüse (31) in dem Endabschnitt (32) ist;
- die Länge L der Rippen (41) zwischen 2H und 4H beträgt;
- die Entfernung S der Rippen (41) zu dem Triebwerksdüsenauslass zwischen H und 3H beträgt.

9. Strömungsauslasssystem nach einem der Ansprüche 1-4, bei welchem die Rippen (41) gebogene Platten sind.

10. Strömungsauslasssystem nach einem der Ansprüche 1-4, bei welchem die Rippen (41) tragflächenförmige Körper sind.

11. Luftfahrzeugtriebwerk mit einem Strömungsauslasssystem nach einem der Ansprüche 1 - 10, bei welchem der Motor ein Turboshaft-Triebwerk ist.

12. Luftfahrzeugtriebwerk mit einem Strömungsauslasssystem nach einem der Ansprüche 1 - 10, bei welchem der Motor ein Turboprop-Triebwerk ist.

## Revendications

1. Système d'évacuation d'écoulement pour un moteur d'aéronef, comprenant une buse de moteur (31) qui convoie l'écoulement d'échappement de moteur (11) et un éducteur (33) recevant ledit écoulement d'échappement de moteur (11) et un écoulement de ventilation de moteur (13), l'éducteur (33) étant un conduit dans lequel le mélange entre l'écoulement d'échappement de moteur et l'écoulement de ventilation s'effectue, et qui est configuré de telle sorte qu'une partie de l'énergie de l'écoulement d'échappement de moteur soit transmise à l'écoulement de ventilation pour une meilleure ventilation du moteur, la buse de moteur (31) comportant une section finale (32) en contact par sa surface radiale extérieure avec ledit écoulement de ventilation (13), l'écoulement d'échappement de moteur (11) ayant un faible tourbillonnement lorsque le moteur fonctionne dans des conditions nominales et un tourbillonnement élevé lorsque le moteur fonctionne en dehors des conditions nominales, **caractérisé en ce que** ladite buse de moteur (31) comprend une pluralité de dispositifs de conditionnement d'écoulement local (41), qui sont des ailettes orientées radialement ou des ailettes orientées avec une déviation angulaire prédéterminée ou variable par rapport à une orientation radiale, disposées dans sa surface radiale intérieure dans ladite section finale (32), configurées de telle sorte qu'elles réduisent le tourbillonnement de l'écoulement d'échappement de moteur (11) à la sortie de la buse de moteur (31), afin de produire une dépression supplémentaire de façon à améliorer les effets d'aspiration sur l'écoulement de ventilation (13), et afin de faciliter le mélange de l'écoulement d'échappement de moteur (11) et de l'écoulement de ventilation (13), améliorant son évacuation le long de l'éducteur (33).

2. Système d'évacuation d'écoulement selon l'une quelconque de la revendication 1, dans lequel lesdits dispositifs de conditionnement d'écoulement local (41) sont des ailettes réparties le long de la totalité de la section finale (32) de la buse de moteur (31).

3. Système d'évacuation d'écoulement selon l'une quelconque des revendications 1 à 2, dans lequel lesdits dispositifs de conditionnement d'écoulement local (41) sont des ailettes réparties le long d'un secteur de la section finale (32) de la buse de moteur (31).

4. Système d'évacuation d'écoulement selon l'une quelconque des revendications 2 à 3, dans lequel la répartition desdits dispositifs de conditionnement d'écoulement local (41) est une répartition également espacée.

5. Système d'évacuation d'écoulement selon l'une quelconque des revendications 1 à 4, dans lequel lesdites ailettes (41) sont des plaques plates.

6. Système d'évacuation d'écoulement selon la revendication 5, dans lequel lesdites ailettes (41) ont une forme rectangulaire.

7. Système d'évacuation d'écoulement selon la revendication 5, dans lequel lesdites ailettes (41) ont une forme trapézoïdale, le côté de leur bord avant étant incliné par rapport à l'écoulement d'échappement de moteur (11).

8. Système d'évacuation d'écoulement selon l'une quelconque des revendications 6 à 7, dans lequel :
- la hauteur H desdites ailettes (41) est comprise entre D/20 et D/10, D étant le diamètre de la buse de moteur (31) dans ladite section finale (32) ;
- la longueur L desdites ailettes (41) est comprise entre 2H et 4H ;
- la distance S desdites ailettes (41) à l'orifice de sortie de buse de moteur est comprise entre H et 3H.

9. Système d'évacuation d'écoulement selon l'une quelconque des revendications 1 à 4, dans lequel lesdites ailettes (41) sont des plaques incurvées.

10. Système d'évacuation d'écoulement selon l'une quelconque des revendications 1 à 4, dans lequel lesdites ailettes (41) sont des corps en forme de profil aérodynamique.

11. Moteur d'aéronef comprenant un système d'évacuation d'écoulement selon l'une quelconque des revendications 1 à 10, dans lequel ledit moteur est un moteur à turbomoteur.

12. Moteur d'aéronef comprenant un système d'évacuation d'écoulement selon l'une quelconque des revendications 1 à 10, dans lequel ledit moteur est un moteur à turbopropulseur.
